# FASCICULE DE BREVET EUROPEEN

(11) **EP 3 016 758 B1**
(45) Date de publication et mention de la délivrance du brevet: **19.04.2017**
(21) Numéro de dépôt: 14736776.7
(22) Date de dépôt: 04.07.2014
(51) Int. Cl.: B21D 22/20, B21D 35/00, B62D 21/15, B62D 29/00, C21D 1/673

(54) **PIECE METALLIQUE A ORIENTATION DE DEFORMATION CONTROLEE**
METALLTEIL MIT KONTROLLIERTER VERFORMUNGSORIENTIERUNG
METAL PART WITH CONTROLLED DEFORMATION ORIENTATION

(30) Priorité: 05.07.2013 FR 1356633; 05.07.2013 FR 1356634
(43) Date de publication de la demande: 11.05.2016
(73) Titulaire: Autotech Engineering, A.I.E., 48340 Amorebieta-Etxano (ES); Honda Motor Co., Ltd., Tokyo 107-8556 (JP)
(72) Inventeur: CAZES, Christophe, F-78000 Versailles (FR); GATARD, Gregory, F-91310 Leuville-sur-Orge (FR); JONSSON, Martin, S-972 42 Lulea (SE); MIURA,Yusuke, Tokyo 102-0075 (JP); HASEGAWA,Atsushi, Saitama 351-0193 (JP)
(74) Mandataire: ZBM Patents - Zea, Barlocci & Markvardsen
(86) Numéro de dépôt international: PCT/EP2014/064384
(87) Numéro de publication internationale: WO 2015/001114

(56) Documents cités:
- EP-A1- 2 143 621
- EP-A1- 2 565 489
- WO-A1-2006/038868
- JP-A- H07 119 892
- US-A1- 2009 072 586

## Description

### DOMAINE DE L'INVENTION

La présente invention concerne le domaine des pièces métalliques intervenant dans la réalisation d'une ossature métallique, notamment d'un châssis ou d'une carrosserie ou caisse de véhicules.

### ETAT DE L'ART

On trouvera des exemples de réalisation de pièces connues dans les documents WO2006/038868, WO2009/123538, EP2143621, EP2565489, US2009/072586, JP2011/173166, JP07/119892, US2007/052258, GB2344794, WO00/03909, DE10257262 et DE102006048429.

Le document EP-A-2143621 divulgue une pièce métallique selon le préambule de la revendication 1.

### OBJECTIF GENERAL DE L'INVENTION

La présente invention a pour objectif de proposer des moyens permettant de contrôler avec précision la nature et l'orientation de la déformation d'une pièce métallique, de préférence allongée et/ou compact.

Le but précité est atteint selon l'invention grâce à une pièce métallique selon les caractéristiques de la revendication 1.

Selon un autre aspect de l'invention, la pièce métallique comprend un fond de pièce et deux feuillures latérales séparées du fond de pièce par des murs, la section de la pièce métallique étant définie par deux axes de référence, l'un globalement orthogonal au fond de pièce et l'autre globalement parallèle à au moins une feuillure, et la pièce comprend une zone de plus faible résistance mécanique définie lors de l'emboutissage et qui s'étend sur l'un au moins des murs, de manière dissymétrique par rapport aux axes de référence.

Selon encore un autre aspect de l'invention, la pièce métallique comprend un fond de pièce et deux feuillures latérales séparées du fond de pièce par des murs, et la pièce comprend une zone de plus faible résistance mécanique définie lors de l'emboutissage et qui possède une largeur non constante perpendiculairement à un plan de section transversale de la pièce.

D'autres caractéristiques, buts et avantages de la présente invention apparaîtront à la lecture de la description détaillée qui va suivre et au regard de dessins annexés donnés à titre d'exemples non limitatifs et sur lesquels :

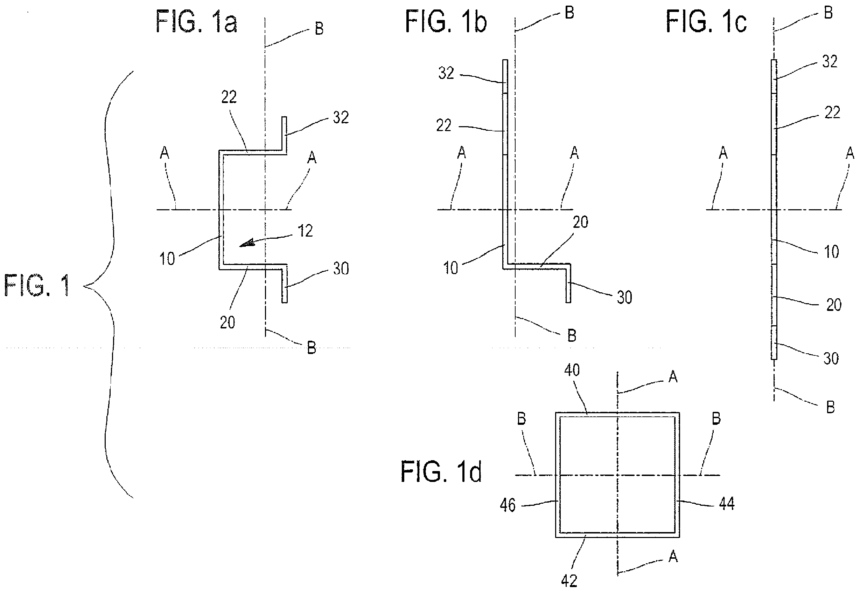

- la figure 1 représente respectivement sur ses dessins 1a, 1b, 1c, 1d, des sections droites de quatre variantes générales de réalisation de pièces auxquelles peut s'appliquer l'invention,

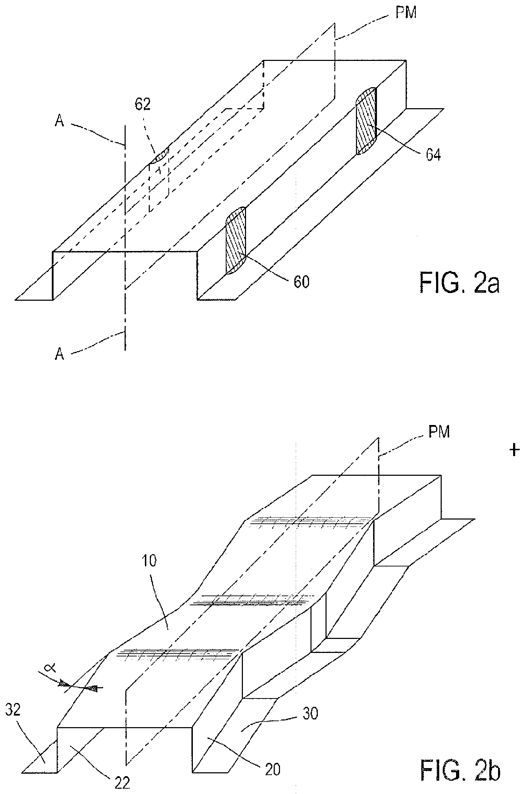

- les figures 2a à 2k représentent différents exemples de réalisation de pièces métalliques conformes à la présente invention comprenant au moins deux zones de résistance mécanique plus faible que le corps de la pièce, disposées respectivement de part et d'autre d'une section médiane longitudinale de ladite pièce,

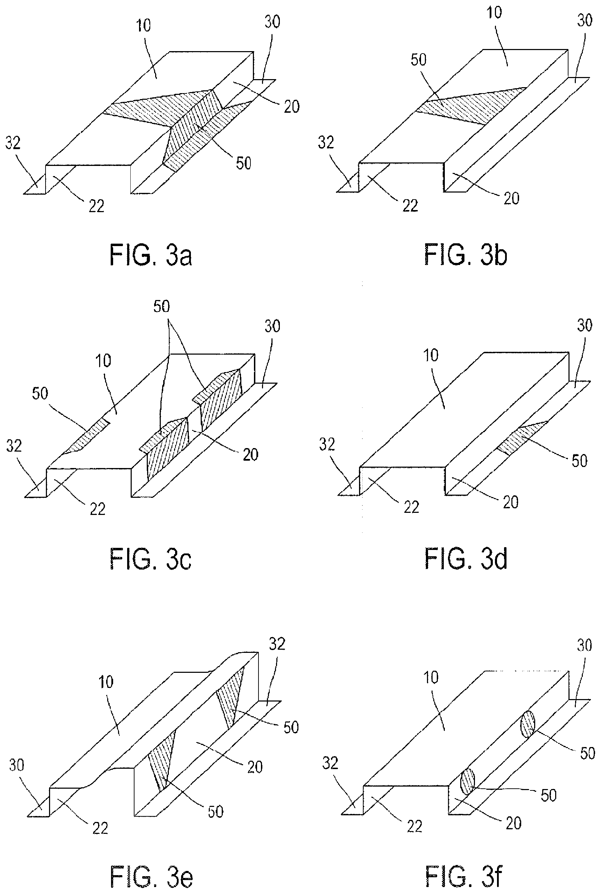

- les figures 3a à 3f représentent six exemples non limitatifs de pièces conformes à des variantes de la présente invention comportant des zones de résistance mécanique réduite, possédant une largeur non constante,

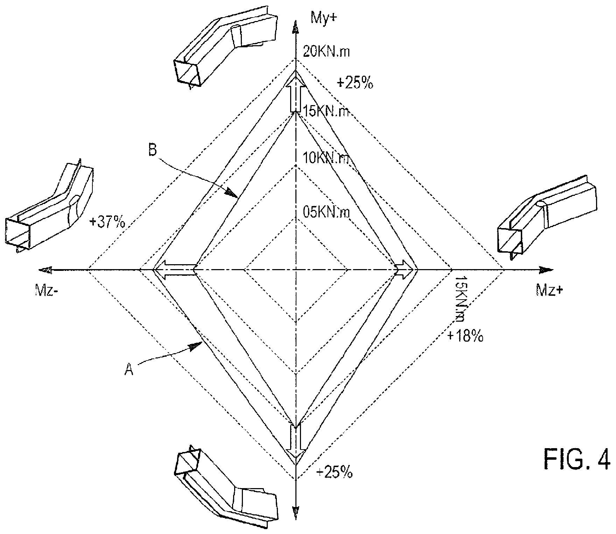

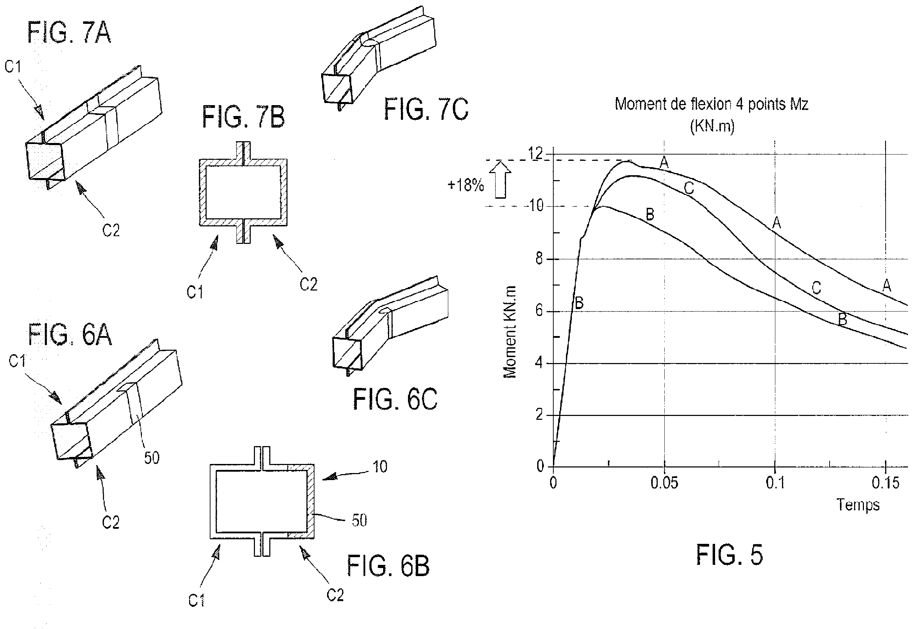

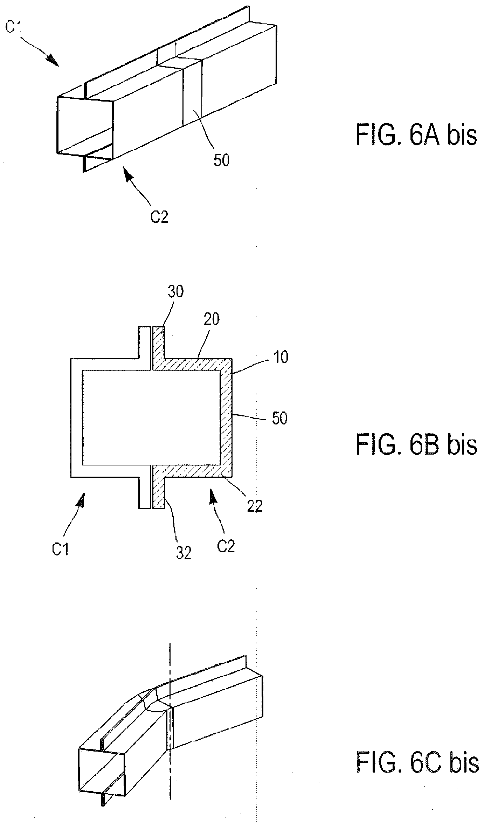

- la figure 4 représente un diagramme comparatif des moments de flexion obtenus selon 4 axes de flexion, respectivement pour une pièce conforme à l'invention représentée sur la figure 6A comportant une zone de faible résistance mécanique limitée à une partie de sa section droite et pour une pièce classique représentée sur la figure 7A comportant une zone de faible résistance mécanique sur la totalité de sa section droite,

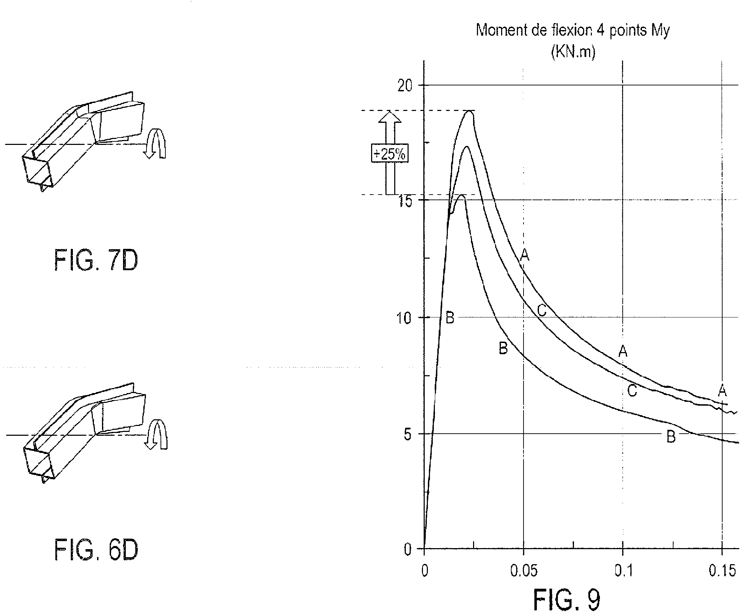

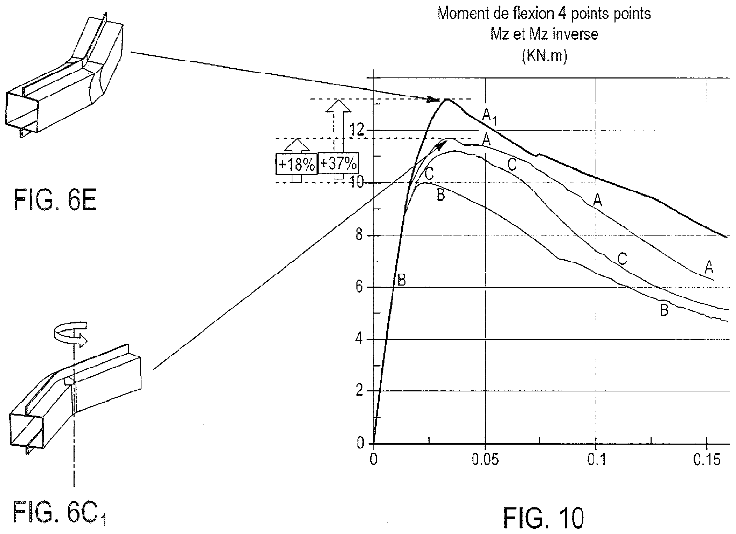

- la figure 5 représente la courbe de moments de flexion en fonction du temps, autour d'un axe Z, respectivement pour la pièce conforme à l'invention représentée sur la figure 6A, pour la pièce classique représentée sur la figure 7A et pour une variante alternative de pièce conforme à l'invention représentée sur la figure 6Abis,
- les figures 6B, 6Bbis et 7B représentent des vues en coupe transversale des mêmes pièces et visualisent le lieu de zones de faible résistance mécanique, tandis que les figures 6C, 6Cbis et 7C représentent les flexions des pièces autour de l'axe Z correspondant aux courbes illustrées sur la figure 5,

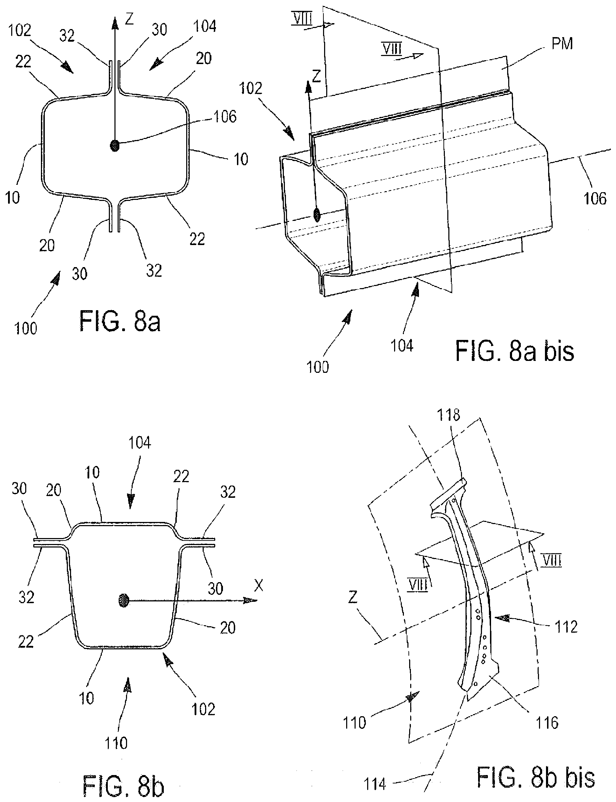

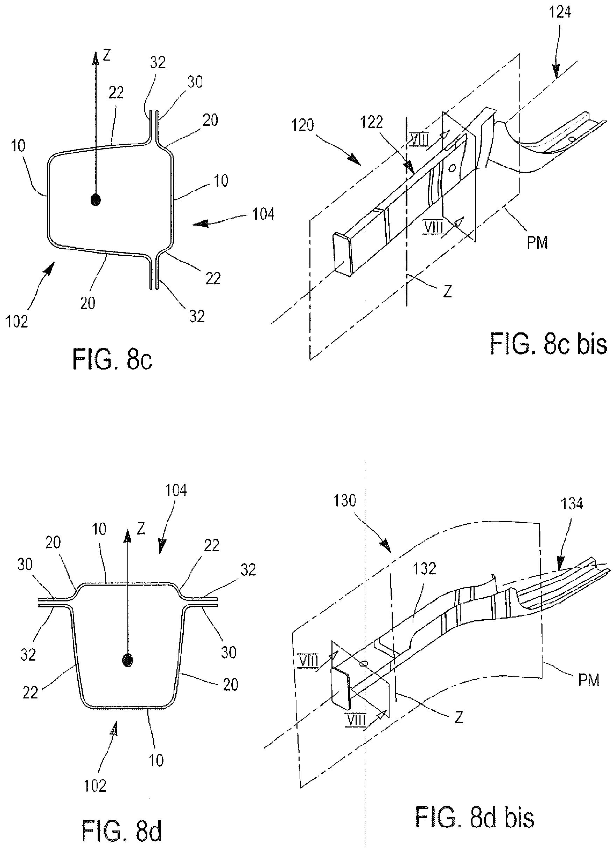

- les figures 8a, 8b, 8c et 8d représentent quatre variantes non limitatives de section transversale de pièces conformes à la présente invention et visualisent des axes de flexion privilégiés pour ces pièces, tandis que les figures 8abis, 8bbis, 8cbis et 8dbis illustrent une section médiane longitudinale pour de telles pièces,
- la figure 9 représente la courbe de moments de flexion en fonction du temps, autour de l'axe Y, respectivement pour la pièce conforme à l'invention représentée sur la figure 6A, pour la pièce classique représentée sur la figure 7A et pour la variante alternative de pièce conforme à l'invention représentée sur la figure 6Abis,
- les figures 6D et 7D représentent les flexions de la pièce conforme à l'invention représentée sur la figure 6A et de la pièce classique représentée sur la figure 7A autour de l'axe Y correspondant aux courbes illustrées sur la figure 9,
- la figure 10 représente la courbe de moments de flexion en fonction du temps, respectivement pour la pièce conforme à l'invention représentée sur la figure 6A, pour la pièce classique représentée sur la figure 7A et pour la variante alternative de pièce conforme à l'invention représentée sur la figure 6Abis, autour de l'axe Z et ce respectivement dans le sens de flexion souhaité et dans le sens inverse ,
- les figures 6C1, identique à la figure 6C, et 6E représentent les flexions de la pièce conforme à l'invention représentée sur la figure 6A autour de l'axe Z et ce respectivement dans le sens de flexion souhaité et dans le sens inverse.

On va décrire 4 exemples de pièces auxquelles peut s'appliquer la présente invention, en regard des figures 1a à 1d. Ces figures représentent la section droite, ou « section transversale », de quatre variantes de réalisation, selon un plan de coupe perpendiculaire à un axe longitudinal principal des pièces. Cet axe longitudinal principal des pièces sera également appelé « axe d'élancement principal » par la suite. Les pièces ainsi illustrées possèdent de préférence une section droite constante sur toute leur longueur correspondant à la représentation donnée sur les figures 1a à 1d. Selon une alternative cependant la section droite des pièces peut évoluer sur la longueur des pièces.

On a représenté sur les figures 1a, 1b et 1c annexées différents exemples de réalisation de pièces métalliques comprenant un fond de pièce 10, et deux feuillures latérales 30, 32, séparées du fond de pièce 10 par des murs 20, 22.

Selon le mode de réalisation de la figure 1a, la pièce, en forme générale de chapeau, comprend un corps en U 12 comprenant une âme qui forme le fond de pièce 10 et deux ailes globalement orthogonales à l'âme10 qui forment les murs 20, 22. Les feuillures latérales 30, 32, s'étendent globalement orthogonalement aux murs 20, 22 et donc globalement parallèlement au fond de pièce 10 selon la figure 1a.

Selon la figure 1b, le corps a une forme générale de L comprenant une âme qui forme le fond de pièce 10, une aile 20 globalement orthogonale à l'âme 10 qui forme un mur, une première feuillure 30 qui s'étend globalement orthogonalement au mur 20 et donc globalement parallèlement au fond de pièce 10, une deuxième aile 22 globalement dans le prolongement de l'âme 10 qui forme un second mur et une deuxième feuillure 32 qui s'étend globalement dans le prolongement du mur 22.

Selon la figure 1c, le corps est formé d'une toile globalement plane de sorte que les deux murs 20, 22 sont situés globalement dans le prolongement de l'âme 10 formant fond de pièce et les deux feuillures 30, 32 sont également globalement dans le prolongement des murs 20, 22.

Selon les trois modes de réalisation représentés sur les figures 1a, 1b et 1c, les deux feuillures 30, 32 sont parallèles entre elles. Cette disposition n'est cependant pas limitative. L'on peut en effet envisager des variantes selon lesquelles les deux feuillures 30, 32 sont au moins légèrement inclinées l'une par rapport à l'autre.

Comme on le voit sur les figures 1a, 1b et 1c, dans chacune des variantes de réalisation, la pièce métallique a une section définie par deux axes de référence, l'un A-A globalement orthogonal au fond de pièce 10 et l'autre B-B globalement parallèle à au moins une feuillure.

On a par ailleurs représenté sur la figure 1d une variante de réalisation selon laquelle la pièce est une pièce tubulaire comprenant, sans que cet exemple ne soit limitatif, une section définie par quatre parois globalement planes 40, 42, 44 et 46, respectivement parallèles et orthogonales deux à deux.

Là encore la pièce schématisée sur la figure 1d comprend deux axes de référence, l'un A-A globalement orthogonal aux parois 40, 42 et parallèle aux parois 44, 46 et l'autre B-B globalement parallèle aux parois 40, 42 et orthogonal aux parois 44 et 46.

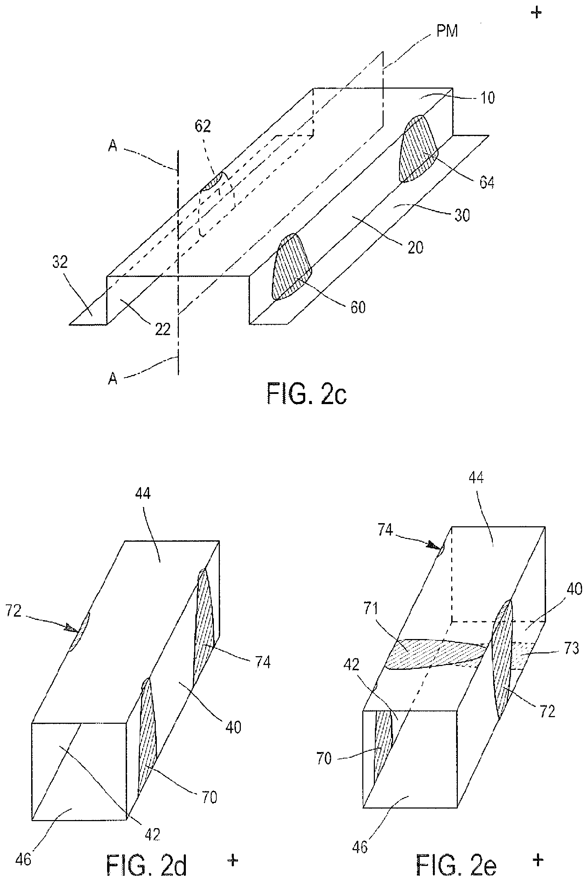

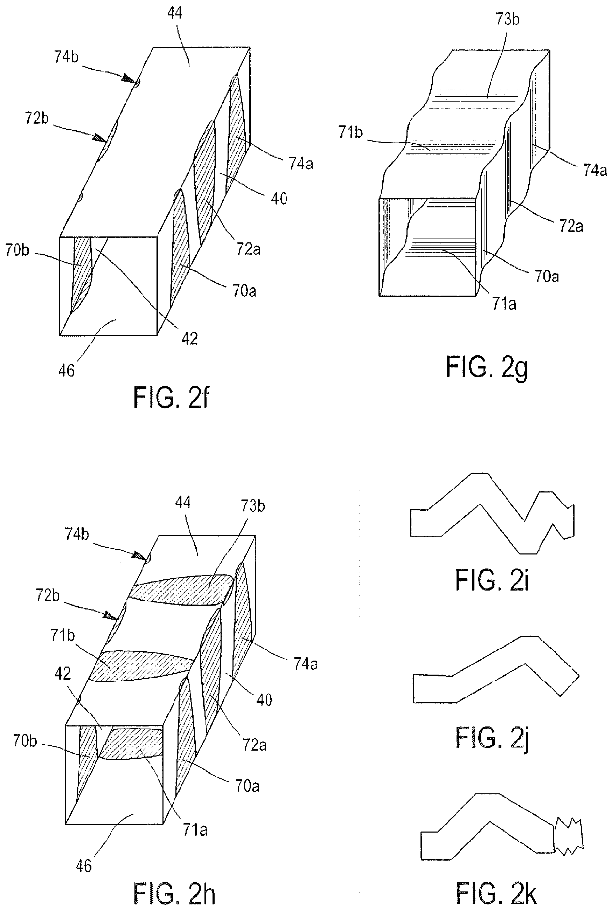

Les figures 2 représentent différents exemples de réalisation de pièces métalliques conformes à la présente invention comprenant au moins deux zones de résistance mécanique plus faible que le corps de la pièce, disposées respectivement de part et d'autre d'une section médiane longitudinale PM de ladite pièce passant par l'axe de référence A-A.

L'invention s'applique à des pièces allongées présentant un axe d'élongation principal ou « axe d'élancement principal ».

Les sections droites transversales des pièces sont des sections par des plans perpendiculaires à cet axe d'élongation ou axe d'élancement principal.

Dans le cadre de la présente demande, on entend par « section médiane longitudinale » une section longitudinale de pièce qui passe par les centres d'inertie ou centres de gravité de deux sections droites transversales de la pièce situées au voisinage d'extrémités d'un tronçon s'étendant selon l'axe d'élongation principal.

Plus précisément, la « section médiane longitudinale » est une section longitudinale de pièce qui passe par
- l'axe d'élancement principal de la pièce passant lui-même par les centres d'inertie de section droite de la pièce (monopièce venue de matière ou ensemble formé par assemblage de plusieurs pièces élémentaires) perpendiculaire à l'axe d'élancement et
- un axe de flexion privilégié choisi suivant le motif de déformation.

A titre d'exemples non limitatifs, l'axe de flexion privilégié sera un axe vertical Z dans un repère véhicule pour un longeron (« side rail » en anglais) et un axe horizontal X pour un pied milieu.

La section médiane longitudinale d'une pièce n'est pas nécessairement plane. Elle peut être courbe.

Dans le cas d'une pièce rectiligne de section droite constante, la section médiane longitudinale est cependant un plan médian longitudinal. Ce plan médian longitudinal peut passer par exemple par la moitié de la largeur ou de l'épaisseur d'une pièce.

Dans le cas où la « pièce » conforme à l'invention est formée par assemblage de plusieurs entités initialement individualisées, mais réunies par assemblage, la section médiane longitudinale est une section longitudinale qui passe par les centres d'inertie ou centres de gravité de deux sections droites transversales de l'assemblage desdites entités.

On a représenté sur la figure 8a la section droite d'une poutre 100 formée par assemblage de deux pièces en chapeau 102, 104 du type illustré sur la figure 1a, accolées et assemblées au niveau de leur feuillures 30, 32. La poutre 100 s'étend selon un axe d'élongation ou d'élancement longitudinal 106 qui correspond par exemple à un axe Y dans un repère véhicule. On a également représenté sur la figure 8a un axe de flexion privilégié Z choisi. En l'espèce de manière arbitraire l'axe de flexion privilégié Z s'étend dans le plan de la section droite et dans le plan de jonction entre les deux pièces 102, 104. On a également représenté sur la figure 8abis une section médiane longitudinale plane PM d'une telle pièce qui passe par l'axe d'élancement 106 et par l'axe de flexion Z. La section médiane longitudinale plane PM passe par les centres d'inertie ou centres de gravité de deux sections droites transversales de la pièce situées au voisinage d'extrémités de la poutre 100. La section médiane longitudinale PM illustrée sur la figure 8abis est seulement un exemple de section médiane longitudinale de la poutre illustrée définie par l'axe de flexion Z choisi. La poutre illustrée sur la figure 8a présente en effet une infinité de sections médianes longitudinales passant par les centres d'inertie ou centres de gravité précités, selon l'axe de flexion privilégié choisi.

On a représenté sur les figures 8b et 8bbis une pièce 110 formant pied milieu comprenant un tronçon principal 112 qui s'étend selon un axe d'élongation ou d'élancement longitudinal 114 incurvé et qui possède une embase 116 et une tête 118 dissymétriques. L'axe d'élongation ou d'élancement longitudinal 114 s'étend globalement selon un axe vertical Z dans un repère véhicule. Comme représenté sur la figure 8b la pièce 110 formant pied milieu est là encore formée par assemblage de deux pièces en chapeau 102, 104 du type illustré sur la figure 1a, accolées et assemblées au niveau de leur feuillures 30, 32 (en l'espèce la pièce 104 est une pièce de couverture dont les murs 20, 22 ont une hauteur inférieure aux murs 20, 22 de la pièce principale 102). Ici les murs 20, 22 et les fonds de pièce 10 s'étendent donc verticalement. On a également représenté sur la figure 8b un axe de flexion privilégié X choisi (ici horizontal dans un repère véhicule). En l'espèce de manière arbitraire l'axe de flexion privilégié X s'étend dans le plan de la section droite et perpendiculairement aux murs 20, 22 de la pièce principale 102. On a également représenté sur la figure 8bbis une section médiane longitudinale plane PM d'une telle pièce qui passe par l'axe d'élancement 114 et par l'axe de flexion X. La section médiane longitudinale plane PM passe par les centres d'inertie ou centres de gravité de deux sections droites transversales de la pièce situées au voisinage d'extrémités du tronçon central de la pièce 110 s'étendant selon l'axe d'élongation principal 114. La section médiane longitudinale PM illustrée sur la figure 8bbis suivant le contour de l'axe d'élongation incurvé 114, est incurvé selon la même courbure. La section médiane longitudinale PM illustrée sur la figure 8bbis est seulement un exemple de section médiane longitudinale de la poutre illustrée définie par l'axe de flexion X choisi. La poutre illustrée sur la figure 8b présente en effet une infinité de sections médianes longitudinales passant par les centres d'inertie ou centres de gravité précités, selon l'axe de flexion privilégié choisi.

On a représenté sur les figures 8c et 8cbis une pièce 120 formant longeron avant comprenant un tronçon principal rectiligne 122 qui s'étend selon un axe d'élongation ou d'élancement longitudinal 124 rectiligne. L'axe d'élongation ou d'élancement longitudinal 124 s'étend globalement selon un axe horizontal Y dans un repère véhicule. Comme représenté sur la figure 8c la pièce 120 formant longeron est là encore formée par assemblage de deux pièces en chapeau 102, 104 du type illustré sur la figure 1a, accolées et assemblées au niveau de leur feuillures 30, 32 (en l'espèce la pièce 104 est une pièce de couverture ou habillage intérieur dont les murs 20, 22 ont une hauteur inférieure aux murs 20, 22 de la pièce principale 102). Ici les murs 20, 22 s'étendent donc horizontalement, tandis que les fonds de pièce 10 s'étendent verticalement. On a également représenté sur la figure 8c un axe de flexion privilégié Z choisi (ici vertical dans un repère véhicule). En l'espèce de manière arbitraire l'axe de flexion privilégié Z s'étend dans le plan de la section droite et perpendiculairement aux murs 20, 22 de la pièce principale 102. On a également représenté sur la figure 8cbis une section médiane longitudinale plane PM d'une telle pièce qui passe par l'axe d'élancement 124 et par l'axe de flexion Z. La section médiane longitudinale plane PM passe par les centres d'inertie ou centres de gravité de deux sections droites transversales de la pièce situées au voisinage d'extrémités du tronçon principal de la pièce 120 s'étendant selon l'axe d'élongation principal 124. La section médiane longitudinale PM illustrée sur la figure 8cbis est plane. La section médiane longitudinale PM illustrée sur la figure 8cbis est seulement un exemple de section médiane longitudinale de la poutre illustrée définie par l'axe de flexion Z choisi. La poutre illustrée sur la figure 8c présente en effet une infinité de sections médianes longitudinales passant par les centres d'inertie ou centres de gravité précités, selon l'axe de flexion privilégié choisi.

On a représenté sur les figures 8d et 8dbis une variante de pièce 130 formant longeron avant comprenant un tronçon principal incurvé 132 qui s'étend selon un axe d'élongation ou d'élancement longitudinal 134 incurvé. L'axe d'élongation ou d'élancement longitudinal 134 s'étend globalement selon un axe horizontal Y dans un repère véhicule. Comme représenté sur la figure 8d la pièce 130 formant longeron est là encore formée par assemblage de deux pièces en chapeau 102, 104 du type illustré sur la figure 1a, accolées et assemblées au niveau de leur feuillures 30, 32 (en l'espèce la pièce 104 est une pièce de couverture ou habillage dont les murs 20, 22 ont une hauteur inférieure aux murs 20, 22 de la pièce principale 102). La section droite représentée sur la figure 8d est de géométrie identique à celle de la figure 8c, mais pivotée de 90° par rapport à la figure 8c. Ici les murs 20, 22 s'étendent donc verticalement, tandis que les fonds de pièce 10 s'étendent horizontalement. On a également représenté sur la figure 8d un axe de flexion privilégié Z choisi (ici vertical dans un repère véhicule). En l'espèce de manière arbitraire l'axe de flexion privilégié Z s'étend dans le plan de la section droite et perpendiculairement au fond de pièce 10 de la pièce principale 102. On a également représenté sur la figure 8dbis une section médiane longitudinale plane PM d'une telle pièce qui passe par l'axe d'élancement 134 et par l'axe de flexion Z. La section médiane longitudinale plane PM passe par les centres d'inertie ou centres de gravité de deux sections droites transversales de la pièce situées au voisinage d'extrémités du tronçon principal de la pièce 130 s'étendant selon l'axe d'élongation principal 134. La section médiane longitudinale PM illustrée sur la figure 8dbis suivant le contour de l'axe d'élongation incurvé 134, est incurvé selon la même courbure.. La section médiane longitudinale PM illustrée sur la figure 8dbis est seulement un exemple de section médiane longitudinale de la poutre illustrée définie par l'axe de flexion Z choisi. La poutre illustrée sur la figure 8d présente en effet une infinité de sections médianes longitudinales passant par les centres d'inertie ou centres de gravité précités, selon l'axe de flexion privilégié choisi.

Les plans de coupe des sections droites représentées sur les figures 8a, 8b, 8c et 8d (plans de coupe perpendiculaires à l'axe longitudinal principal des pièces) sont référencés VIII-VIII sur le figures 8abis, 8bbis, 8cbis et 8dbis.

Comme indiqué précédemment les axes de flexion choisis dépendent de la déformation souhaitée. Ils ne sont pas limités aux modalités décrites précédemment. En particulier les axes de flexion ne sont pas forcément perpendiculaires ou parallèles aux murs 20, 22 des pièces, mais peuvent s'étendre selon un angle quelconque par rapport auxdits murs 20, 22, par exemple à 45° ou un autre angle vis-à-vis de ces murs.

Par la suite de la description on emploiera à titre de simplification l'expression « plan médian longitudinal » sans que cette expression puisse être considérée comme limitative. L'expression « plan médian longitudinal » devra en effet être considérée comme englobant toute « section médiane longitudinale », même non plane, répondant à la définition qui précède.

Dans le cadre de la présente demande, on entend par « deux zones disposées respectivement de part et d'autre d'un plan médian longitudinal de ladite pièce », deux zones qui s'étendent respectivement de part et d'autre d'un plan médian longitudinal de la pièce, sans que l'une ou l'autre des deux zones ne coupe ledit plan médian longitudinal.

Plus précisément on voit sur la figure 2a un mode de réalisation d'une pièce du type illustré sur la figure 1a qui comprend trois zones 60, 62, 64 disposées alternativement respectivement de part et d'autre d'un plan médian longitudinal PM de la dite pièce passant par l'axe de référence A-A, mais situées également alternativement en des lieux séparés longitudinalement le long de la pièce.

Dans le cadre de la présente demande, on entend par « zones situées alternativement en des lieux séparés longitudinalement le long de la pièce » des zones qui sont situées dans des lieux différents de la pièce, réparties longitudinalement le long de la pièce, sans que lesdites zones ne soient adjacentes.

Selon le mode de réalisation illustré sur la figure 2a, les zones 60, 62 et 64 sont définies essentiellement sur les murs 20, 22 de la pièce. Le cas échéant les zones 60, 62 et 64 peuvent également s'étendre au moins en partie sur les zones de transition entre les murs 20, 22 et le fond de pièce 10 et/ou les feuillures 30, 32, voire également en_partie sur le fond de pièce 10 et/ou les feuillures 30, 32.

L'homme de l'art comprendra qu'une telle pièce permet de définir des points de faiblesse au niveau des zones 60, 62 et 64. Ces zones de faiblesse 60, 62 et 64 génèrent, lorsqu'un effort axial ou un effort latéral transversal au plan PM est appliqué à la pièce, des zones préférentielles d'articulation imposant une direction de déformation. Cela conduit à un pliage en accordéon de la pièce tel qu'illustré sur la figure 2b, comprenant des tronçons inclinés par rapport au plan médian PM de la pièce dans des directions alternées. Sur la figure 2b on a illustré la déformation d'un angle α de certains tronçons de la pièce, par rapport à leur plan longitudinal d'origine. Ainsi la pièce conserve dans son ensemble une direction générale centrée sur le plan médian PM.

D'une manière plus générale, l'homme de l'art comprendra que les dispositions conformes à la présente invention permettent d'obtenir une déformation contrôlée en compression et/ou en flexion, c'est-à-dire une déformation en compression seule ou une déformation en flexion seule ou une déformation en compression et flexion combinées, suivant les prestations recherchées.

On voit sur la figure 2c un mode de réalisation d'une pièce du type illustré sur la figure 1a qui constitue une variante de la figure 2a et comprend des zones 60, 62, 64 disposées respectivement de part et d'autre d'un plan médian longitudinal PM de la dite pièce passant par l'axe de référence A-A, situées également alternativement en des lieux séparés longitudinalement le long de la pièce et qui possèdent une largeur non constante transversalement à un plan de section droite de la pièce.

Dans le cadre de la présente demande on entend par « section » ou « section droite », une section de la pièce passant par un plan perpendiculaire à l'axe longitudinal ou axe principal de la pièce.

La largeur non constante des zones 60, 62, 64, permet d'améliorer la déformation en accordéon de la pièce selon l'axe de référence A-A comme illustré sur la figure 2b malgré des dissymétries de structure de la pièce.

On a représenté sur la figure 2d une variante appliquée à une pièce tubulaire du type illustré sur la figure 1d pour laquelle les zones de faiblesse alternées 70, 72, 74, situées respectivement de part et d'autre d'un plan médian longitudinal et en des lieux séparés longitudinalement, sont limitées à deux parois opposées 40, 42, et sur la figure 2i la déformation résultante.

On notera que là encore ces zones de faiblesse 70, 72 et 74 sont formées en des lieux séparés longitudinalement le long de la pièce. Cette disposition permet comme illustré sur la figure 2i un pliage en accordéon de la pièce par articulation autour de zones charnières matérialisées par les zones de faiblesse 70, 72 et 74.

Une variante est illustrée sur la figure 2e. Selon cette variante, des zones de plus faible résistance, 70, 71, 72, 73, 74 sont réalisées alternativement sur chacune des parois 40, 42 et 44, 46. Et là encore les zones de faiblesse 70, 71, 72, 73, 74 sont formées en des lieux successivement séparés longitudinalement le long de la pièce. Les zones de plus faible résistance 70, 72, 74 formées sur les parois opposées 40, 42, sont décalées d'un demis pas par rapport aux zones de faiblesse 71, 73 formées sur les parois 44 et 46 qui leur sont perpendiculaires. Les zones 70, 72 et 74 sont situées respectivement de part et d'autre d'un plan médian longitudinal qui passe par l'axe A-A. Et les zones 71 et 73 sont situées respectivement de part et d'autre d'un plan médian longitudinal qui passe par l'axe B-B.

On a représenté sur la figure 2f une variante appliquée à une pièce tubulaire du type illustré sur la figure 1d pour laquelle les zones de faiblesse alternées 70, 72, 74, disposées alternativement de part et d'autre d'un plan médian longitudinal, sont limitées à deux parois opposées 40, 42, et sur la figure 2g la déformation résultante. Les zones 70, 72 et 74 sont situées respectivement de part et d'autre d'un plan médian longitudinal qui passe par l'axe A-A.

On notera que ici la pièce comprend des zones de faiblesse additionnelle de sorte que deux zones de faiblesse 70a, 70b, respectivement 72a, 72b sont formées en regard en des lieux identiques longitudinalement le long de la pièce. Cette disposition permet comme illustré sur la figure 2g un pliage de la pièce par affaissement sur elle-même de sorte que la pièce reste en tout point de sa longueur globalement centrée sur le plan médian longitudinal PM passant par l'axe de référence A-A.

Une autre variante est illustrée sur la figure 2h. Selon cette variante, des zones de plus faible résistance, 70, 71, 72, 73, 74 sont réalisées alternativement sur des paires opposées de quatre parois 40, 42 et 44, 46. Et là encore deux zones de faiblesse 70a, 70b ; 71 a, 71b ; 72a, 72b ; 73a, 73b ; 74a, 74b sont formées en regard en des lieux identiques longitudinalement le long de la pièce, mais les zones de plus faible résistance 70a, 70b ; 72a, 72b ; 74a, 74b formées sur les parois 40, 42, sont décalées d'un demis pas par rapport aux zones de faiblesse 71a, 71b ; 73a, 73b formées sur les parois 44 et 46. Les zones 70, 72 et 74 sont situées respectivement de part et d'autre d'un plan médian longitudinal qui passe par l'axe A-A. Et les zones 71 et 73 sont situées respectivement de part et d'autre d'un plan médian longitudinal qui passe par l'axe B-B.

Les figures 2i, 2j et 2k schématisent trois exemples non limitatifs de déformations contrôlées susceptibles d'être obtenus grâce à l'invention, avec au moins deux zones charnières de faiblesse du type illustré sur la figure 2a, 2c ou 2d. Plus précisément les figures 2i, 2j et 2k schématisent trois exemples non limitatifs de déformations contrôlées susceptibles d'être obtenus grâce à l'invention, respectivement pour la figure 2i avec 3 ou 4 zones charnières de faiblesse du type illustré sur la figure 2a, 2c ou 2d, pour la figure 2j avec 2 zones charnières de faiblesse du type illustré sur la figure 2a, 2c ou 2d et pour la figure 2k avec une juxtaposition axiale de 2 zones charnières de faiblesse du type illustré sur la figure 2a, 2c ou 2d et d'un ensemble conçu pour s'affaisser sur lui-même incorporant des zones charnières de faiblesse du type illustré sur la figure 2f ou 2h.

L'homme de l'art comprendra que au moins le mode de réalisation illustré sur la figure 2a correspond à un mode de réalisation selon lequel la pièce métallique conforme à la présente invention comprend au moins une zone de plus faible résistance mécanique définie lors de l'emboutissage et qui s'étend sur l'un au moins des murs, de manière dissymétrique par rapport aux axes de référence A-A et B-B, en l'espèce au moins par rapport à l'axe de référence A-A.

Le fait de prévoir des zones de plus faible résistance mécanique dissymétriques par rapport aux axes de référence et le cas échéant de largeur non constante comme on le verra par la suite, permet de contrôler finement les orientations des déformations générées sous contrainte.

Dans le cas d'une pièce qui présente une section dissymétrique par rapport au plan médian PM, comme illustré par exemple sur la figure 3e, l'utilisation d'une largeur non constante pour au moins certaines des zones de plus faible résistance mécanique 50 permet par exemple d'imposer un axe de flexion maintenu dans ce plan médian, alors qu'en raison de la dissymétrie structurelle de la pièce, une zone de plus faible résistance mécanique de largeur constante conduirait à un axe de flexion incliné par rapport au plan médian.

Généralement pour cela la zone de faible résistance mécanique aura une largeur croissante vers les secteurs de la pièce présentant en section droite une structure plus complexe et donc a priori une résistance mécanique d'origine plus élevée.

La disposition précitée de zone de faiblesse de largeur non constante permet également, si cela est souhaité, pour une pièce présentant une symétrie par rapport au plan médian ou un axe quelconque de référence, d'imposer un axe de flexion non orthogonal à cet axe de référence ou incliné par rapport au plan médian de référence, et ainsi imposer la direction de déformation de la pièce.

On a représenté sur les figures 3a à 3f six exemples de réalisation d'une pièce du type illustré sur la figure 1a comportant des zones 50 de plus faible résistance mécanique que le reste du corps, formées lors de l'emboutissage de la pièce et qui possèdent une largeur non constante transversalement à un plan de section de la pièce. Cette disposition, à savoir l'utilisation de zones de faible résistance mécanique possédant une largeur non constante, permet de contrôler la direction de déformation en flexion.

Les zones de faible résistance mécanique sont hachurées sur les figures 3a à 3f.

L'homme de l'art comprendra que ces pièces comprennent des zones de plus faible résistance mécanique, dissymétriques par rapport aux axes de référence.

Plus précisément selon la figure 3a, les zones 50 sont formées sur toute la section de la pièce et s'étendent donc sur le fond de pièce 10, les murs 20, 22 et les feuillures 30 et 32.

Selon la figure 3b, les zones 50 sont formées sur le fond de pièce 10.

Selon la figure 3c, les zones 50 sont formées essentiellement sur les murs 20, 22 et sur une partie de transition entre les murs 20, 30 et le fond de pièce 10.

Selon la figure 3d, les zones 50 sont formées essentiellement sur une feuillure 30.

On a par ailleurs représenté sur la figure 3e un autre exemple de réalisation d'une variante de pièce inspirée du type en chapeau illustré sur la figure 1a, mais dont le corps de base n'est pas symétrique par rapport à l'axe de référence A-A. En l'espèce l'un des murs 20 est plus large que l'autre mur 22. La pièce comporte sur une partie au moins du mur 20, une zone 50 de plus faible résistance mécanique que le reste du corps formée lors de l'emboutissage de la pièce et cette zone 50 s'élargit vers le fond de pièce 50.

Là encore cette pièce comprend donc une zone de plus faible résistance mécanique, dissymétrique par rapport aux axes de référence.

Selon les modes de réalisation représentés sur les figures 3a à 3e, les flancs des plages 50 de faible résistance mécanique sont globalement rectilignes et inclinés entre eux.

On a représenté sur la figure 3f un autre mode de réalisation selon lequel les plages 50 de faible résistance mécanique ont des flancs non rectilignes, incurvés et ont une forme générale ovoïde, par exemple sur un mur 20.

L'homme de l'art pourra concevoir de nombreuses autres variantes de réalisation, notamment en étendant les zones de faible résistance mécanique sur les zones de transitions voisines des zones hachurées représentées sur les figures annexées.

Les zones de faible résistance mécanique ont des largeurs variables selon les modes de réalisation illustrés sur les figures 2c, 2d, 2e, 2f et 2h.

On notera que selon les figures 2c et 2d les variations de largeur des zones de faible résistance mécanique sont identiques sur toute la longueur de la pièce. En revanche selon les modes de réalisation illustrés sur les figures 2f et 2h, les variations de largeur des zones précitées sont alternées, c'est-à-dire alternativement croissantes et décroissantes dans des directions opposées de la section de la pièce.

De préférence, on réalise les zones de plus faible résistance mécanique par contrôle local de la température d'emboutissage lors d'un procédé d'emboutissage de la pièce.

Plus précisément, l'invention met de préférence en oeuvre un procédé comprenant les étapes consistant à :
- chauffer la pièce dans une gamme de température propre à obtenir une phase austénitique,
- puis emboutir cette pièce dans un outil d'emboutissage comprenant au moins deux éléments complémentaires, formant respectivement fonction de poinçon et matrice, entre lesquels la pièce à conformer est emboutie, adaptés pour définir des températures différentes sur des zones différentes de la pièce emboutie afin d'imposer des régimes de refroidissement différents pour différentes zones de la pièce.

Chacun des poinçon et matrice peut être formé lui-même par assemblage de plusieurs blocs juxtaposés selon la géométrie et les dimensions de la pièce considérée.

Les zones de la pièce en contact avec des parties de l'outil d'emboutissage refroidies, sont embouties à température contrôlée conduisant à des zones de résistance mécanique élevée, typiquement supérieure à 1400MPa, tandis que les zones de la pièce emboutie à température élevée conduisent à des zones de résistance mécanique plus faibles, typiquement inférieure à 1100MPa, par exemple comprises entre 500 et 1000MPa.

Une résistance mécanique plus faible sur certaines zones de la pièce emboutie peut être obtenue grâce à une température locale d'emboutissage élevée, par exemple en ménageant des évidements locaux dans l'outil d'emboutissage de sorte que à ce niveau la pièce préchauffée soit peu refroidie et/ou en augmentant localement la température des outils d'emboutissage, par exemple à l'aide de résistances chauffantes introduites localement dans les blocs d'emboutissage.

Des zones des blocs d'emboutissage peuvent également être refroidies, par exemple à l'aide de canaux formés dans les blocs d'emboutissage et dans lesquels circule un fluide de refroidissement.

La présente invention concerne les pièces réalisées en acier.

Elle peut s'appliquer à tout type de pièces mises en oeuvre dans un véhicule automobile, par exemple et non limitativement, un pied milieu ou un longeron, ou encore dans un dispositif amortisseur ou d'absorption d'énergie.

Lors d'une sollicitation axiale à la compression les zones de plus faible résistance forment des zones charnières de déformation qui permettent d'orienter le sens de déformation latérale de la pièce allongée et évitent ainsi une déformation aléatoire des pièces.

L'invention permet par exemple d'orienter la déformation de longerons vers l'extérieur d'un habitacle et non pas vers l'intérieur de celui-ci, minimisant ainsi les risques d'impact pour les occupants de l'habitacle.

L'invention permet notamment d'optimiser l'absorption d'énergie en cas d'accident.

Elle permet également de réduire les pics d'accélération ressentis par les occupants d'un véhicule, en cas d'accident.

Bien entendu la présente invention n'est pas limitée aux modes de réalisation qui viennent d'être décrits, mais s'étend à toutes variantes conformes à son esprit.

Par exemple la pièce de forme générale en U illustrée sur la figure 1a peut être complétée par une plaque de recouvrement comme illustrée sur les figures 8a, 8b, 8c et 8d.

Ou encore on peut prévoir l'ajout de renforts assemblés et/ou de nervures de raidissement localisées sur certaines faces de la pièce.

Le terme « pièce métallique » dans le cadre de la présente invention doit être compris dans un sens large en ce sens qu'il recouvre à la fois une structure monobloc sans assemblage et une structure formée par l'assemblage de plusieurs entités initialement individualisées, mais réunies par assemblage.

On a illustré sur les figures 6A, 6B et 7A, 7B des pièces de sections droites géométriquement identiques formées de deux pièces élémentaires en chapeau C1 et C2 du type illustré sur la figure 1a, montées tête bêche et fixées par leurs feuillures. Les deux pièces illustrées sur les figures 6A, 6B et 7A, 7B, respectivement conforme à la présente invention et classique, se distinguent par le fait que la pièce illustrée sur les figures 6A, 6B conforme à la présente invention comprend une zone de faible résistance mécanique 50 limitée à l'un des fond de pièce 10 de C2 et une partie adjacente des murs 20, 22, tandis que la pièce illustrée sur les figures 7A, 7B classique comprend une zone de faible résistance mécanique sur la totalité de sa section droite.

On a illustré sur les figures 6Abis et 6Bis une variante de pièce conforme à la présente invention de même géométrie que les figures 6A et 6B (deux pièces élémentaires en chapeau C1 et C2 du type illustré sur la figure 1a, montées tête bêche et fixées par leurs feuillures), mais comprenant une zone de faible résistance mécanique 50 qui couvre la totalité de l'une C2 des deux pièces élémentaires, soit la moitié de la pièce complète formée par assemblage des deux pièces élémentaires C1 et C2.

La figure 5 représente la courbe A du moment de flexion autour de l'axe Z privilégié de la pièce conforme à la présente invention selon la figure 6A lors d'une flexion autour d'un axe parallèle à l'axe B-B (axe Z) comme illustré sur la figure 6C, la courbe B du moment de flexion autour du même axe Z de la pièce classique lors d'une flexion autour d'un même axe parallèle à l'axe B-B comme illustré sur la figure 7C et la courbe C du moment de flexion autour du même axe Z de la pièce conforme à la présente invention selon la figure 6Abis lors d'une flexion autour d'un axe parallèle à l'axe B-B comme illustré sur la figure 6Cbis.

L'examen comparé des figures A et B montre que l'invention permet d'obtenir un moment plus élevé (de l'ordre de +18% en l'espèce).

La figure 4 représente un diagramme comparatif des moments de flexion obtenus selon 4 axes de flexion, respectivement pour la pièce conforme à l'invention représentée sur la figure 6A comportant une zone de faible résistance mécanique limitée à une partie de sa section droite et pour la pièce classique représentée sur la figure 7A comportant une zone de faible résistance mécanique sur la totalité de sa section droite.

Plus précisément on a représenté sur la figure 4 un diagramme des moments pour 4 axes de flexion, Mz+ et Mz- correspondant à deux sens de flexions de directions opposées autour d'un axe parallèle à l'axe B-B, tandis que My+ et My- correspondent à deux sens de flexions de directions opposées autour d'un axe parallèle à l'axe A-A.

L'examen de la figure 4 montre que la présente invention permet à section de pièce identique, d'augmenter les performances par augmentation de l'amplitude du moment de flexion sur les 4 axes de flexion et majoritairement sur les 3 axes de flexion non souhaités afin d'améliorer la robustesse globale de la pièce selon un axe de flexion souhaité/privilégié (c'est-à-dire assurer un fonctionnement constant lors de flexions selon l'axe souhaité/privilégié grâce à la maitrise de différences entre les moments selon les différents axes), et ce sans risque de rupture.

La figure 4 montre une augmentation selon l'invention de l'ordre de +25° selon l'axe de flexion Y, +37° selon l'axe de flexion -Z, +25° selon l'axe de flexion -Y et +18° selon l'axe de flexion Z.

On a représenté sur les figures 9 et 10 des courbes qui sont à la base du tracé du diagramme représenté sur la figure 4.

La figure 9 représente la courbe A du moment de flexion autour de l'axe Y de la pièce conforme à la présente invention selon la figure 6A lors d'une flexion autour d'un axe parallèle à l'axe A-A (axe Y) comme illustré sur la figure 6D, la courbe B du moment de flexion autour du même axe Y de la pièce classique lors d'une flexion autour d'un même axe parallèle à l'axe B-B comme illustré sur la figure 7D et la courbe C du moment de flexion autour du même axe Y de la pièce conforme à la présente invention selon la figure 6Abis lors d'une flexion autour d'un axe parallèle à l'axe B-B.

L'examen comparé des courbes A et B représentées sur la figure 9 montre que l'invention permet d'obtenir un moment plus élevé (de l'ordre de +25% en l'espèce).

La figure 10 reprend les courbes A, B et C illustrées sur la figure 5 pour une flexion autour de l'axe Z comme illustré sur la figure 6C1 et représente en outre une courbe A1 obtenue pour des flexions selon l'axe Z, d'une pièce conforme à l'invention selon la figure 6A, mais dans un sens opposé comme illustré sur la figure 6E.

L'examen comparé des courbes A, B et A1 représentées sur la figure 10 montre que l'invention permet d'obtenir un moment plus élevé (de l'ordre de +18% en l'espèce pour une flexion selon Z comme indiqué précédemment et +37% pour une flexion selon -Z).

## Revendications

1. Pièce métallique, notamment pour la réalisation d'un véhicule automobile, présentant au moins deux zones (60, 62, 64) de résistance mécanique plus faible que le corps de la pièce, disposées respectivement de part et d'autre d'une section médiane longitudinale (PM) de ladite pièce **caractérisée en ce que** lesdites au moins deux zones sont situées alternativement en des lieux séparés longitudinalement le long de la pièce, sans que lesdites zones ne soient adjacentes.

2. Pièce selon la revendication 1, **caractérisée en ce que** les zones (60, 62, 64) de résistance mécanique plus faible que le corps de la pièce sont formées par contrôle local de la température d'emboutissage.

3. Pièce selon l'une des revendications 1 à 2, **caractérisée en ce que** le corps de la pièce possède une résistance mécanique élevée, typiquement supérieure à 1400MPa, tandis que les zones (60, 62, 64) de résistance mécanique plus faible, possède une résistance mécanique inférieure à 1100MPa, typiquement comprises entre 500 et 1000MPa.

4. Pièce selon l'une des revendications 1 à 3, **caractérisée en ce qu'**il comprend également au moins une zone additionnelle (60, 62, 64) de résistance mécanique plus faible que le corps de la pièce, telle que la pièce possède des zones (60, 62, 64) de résistance mécanique plus faible que le corps de la pièce disposées respectivement de part et d'autre du plan médian longitudinal (PM) et formées en regard en des lieux identiques longitudinalement le long de la pièce.

5. Pièce selon l'une des revendications 1 à 4, **caractérisée en ce que** la pièce métallique comprend un fond de pièce (10) et deux feuillures latérales (30, 32) séparées du fond de pièce (10) par des murs (20, 22), et la pièce comprend une zone de plus faible résistance mécanique (60, 62) définie lors de l'emboutissage et qui possède une largeur non constante perpendiculairement à un plan de section transversale de la pièce.

6. Pièce selon l'une des revendications 1 à 5, **caractérisée en ce que** les zones (50 ; 60, 62, 64) de résistance mécanique plus faible que le corps de la pièce sont délimitées par des plages de bords rectilignes.

7. Pièce selon l'une des revendications 1 à 6, **caractérisée en ce que** les zones (50 ; 60, 62, 64) de résistance mécanique plus faible que le corps de la pièce sont délimitées par des plages de bords incurvés.

8. Pièce selon l'une des revendications 1 à 7, **caractérisée en ce qu'**elle comprend au moins deux zones (50 ; 60, 62, 64) de résistance mécanique plus faible que le corps de la pièce réparties sur celle-ci et possédant des variations de largeur identiques le long de la pièce.

9. Pièce selon l'une des revendications 1 à 7, **caractérisée en ce qu'**elle comprend au moins deux zones (50 ; 60, 62, 64) de résistance mécanique plus faible que le corps de la pièce réparties sur celle-ci, et possédant des variations de largeur alternativement d'orientations opposées, le long de la pièce.

10. Pièce selon l'une des revendications 1 à 9, **caractérisée en ce que** les zones (60, 62, 64) de faible résistance mécanique sont définies sur les murs (20, 22) de la pièce.

11. Pièce selon l'une des revendications 1 à 10, **caractérisée en ce que** la pièce métallique comprend un fond de pièce (10) et deux feuillures latérales (30, 32) séparées du fond de pièce (10) par des murs (20, 22), la section de la pièce métallique étant définie par deux axes de référence (A-A), l'un globalement orthogonal au fond de pièce (10) et l'autre globalement parallèle à au moins une feuillure (30, 32), et la pièce comprend une zone de plus faible résistance mécanique (60, 62, 64) définie lors de l'emboutissage et qui s'étend sur l'un au moins des murs (20, 22), de manière dissymétrique par rapport aux axes de référence.

12. Pièce selon l'une des revendications 1 à 11, **caractérisée en ce que** les zones (60, 62, 64) de faible résistance mécanique s'étendent au moins en partie sur des zones de transition entre des murs (20, 22) et un fond de pièce (10) et/ou des feuillures (30, 32), voire également en_partie sur le fond de pièce (10) et/ou les feuillures (30, 32).

13. Pièce selon l'une des revendications 1 à 12, **caractérisée en ce qu'**elle comprend au moins un tronçon sur lequel au moins deux zones (60, 62, 64) de résistance mécanique plus faible que le corps de la pièce, sont disposées respectivement de part et d'autre d'une section médiane longitudinale (PM) de ladite pièce et situées alternativement en des lieux séparés longitudinalement le long de la pièce et au moins un tronçon sur lequel au moins deux zones (60, 62, 64) de résistance mécanique plus faible que le corps de la pièce, sont disposées respectivement de part et d'autre d'une section médiane longitudinale (PM) de ladite pièce et situées en regard en des lieux identiques longitudinalement le long de la pièce.

14. Pièce selon l'une des revendications 1 à 13, dans lequel la pièce métallique est un longeron.

## Patentansprüche

1. Metallteil, insbesondere für die Herstellung eines Kraftfahrzeuges, der mindestens zwei Bereiche (60, 62, 64) geringerer mechanischer Festigkeit als der Teilkörper hat, die jeweils an beiden Seiten eines Längsmittelabschnitts (PM) des Teils angeordnet sind, **dadurch gekennzeichnet, dass** die mindestens zwei Bereiche abwechselnd und an längs getrennten Stellen entlang des Teils angeordnet sind, wobei die Bereiche nicht aneinander angrenzen.

2. Teil nach Anspruch 1, **dadurch gekennzeichnet, dass** die Bereiche (60, 62, 64) geringerer mechanischer Festigkeit als der Teilkörper durch lokale Steuerung der Stanztemperatur gebildet sind.

3. Teil nach einem der Ansprüche 1 bis 2, **dadurch gekennzeichnet, dass** der Teilkörper eine hohe mechanische Festigkeit aufweist, typischerweise höher als 1400 MPa, während die Bereiche (60, 62, 64) geringerer mechanischer Festigkeit eine mechanische Festigkeit geringer als 1100 MPa, typischerweise von zwischen 500 und 1000 MPa aufweisen.

4. Teil nach einem der Ansprüche 1 bis 3, **dadurch gekennzeichnet, dass** er ebenfalls mindestens einen weiteren Bereich (60, 62, 64) geringerer mechanischer Festigkeit als der Teilkörper umfasst, so dass der Teil Bereiche (60, 62, 64) geringerer mechanischer Festigkeit als der Teilkörper umfasst, die jeweils an beiden Seiten der Längsmittelebene (PM) angeordnet sind und gegenüberliegend an längs identischen Stellen entlang des Teils gebildet sind.

5. Teil nach einem der Ansprüche 1 bis 4, **dadurch gekennzeichnet, dass** der Metallteil einen Teilboden (10) und zwei vom Teilboden (10) durch Wände (20, 22) getrennte Seitenfalze (30, 32) umfasst, und der Teil einen Bereich geringerer mechanischer Festigkeit (60, 62) umfasst, der beim Stanzen definiert wird und der eine senkrecht zu einer Querschnittsebene des Teiles nicht konstante Breite hat.

6. Teil nach einem der Ansprüche 1 bis 5, **dadurch gekennzeichnet, dass** die Bereiche (50 ; 60, 62, 64) geringerer mechanischer Festigkeit als der Teilkörper durch Bereiche geradliniger Kanten abgegrenzt sind.

7. Teil nach einem der Ansprüche 1 bis 6, **dadurch gekennzeichnet, dass** die Bereiche (50 ; 60, 62, 64) geringerer mechanischer Festigkeit als der Teilkörper durch Bereiche gekrümmter Kanten abgegrenzt sind.

8. Teil nach einem der Ansprüche 1 bis 7, **dadurch gekennzeichnet, dass** er mindestens zwei Bereiche (50 ; 60, 62, 64) geringerer mechanischer Festigkeit als der Teilkörper umfasst, die über den Teil verteilt sind und identische Breitenänderungen entlang des Teils aufweisen.

9. Teil nach einem der Ansprüche 1 bis 7, **dadurch gekennzeichnet, dass** er mindestens zwei Bereiche (50 ; 60, 62, 64) geringerer mechanischer Festigkeit als der Teilkörper umfasst, die über den Teil verteilt sind und identische Breitenänderungen mit abwechselnd gegenseitigen Orientierungen entlang des Teils aufweisen.

10. Teil nach einem der Ansprüche 1 bis 9, **dadurch gekennzeichnet, dass** die Bereiche (60, 62, 64) geringerer mechanischer Festigkeit auf den Wänden (20, 22) des Teils definiert sind.

11. Teil nach einem der Ansprüche 1 bis 10, **dadurch gekennzeichnet, dass** der Metallteil einen Teilboden (10) und zwei vom Teilboden (10) durch Wände (20, 22) getrennte Seitenfalze (30, 32) umfasst, wobei der Schnitt des Metallteils durch zwei Referenzachsen (A-A), eine im Allgemeinen senkrecht zum Teilboden (10) und die andere im Allgemeinen parallel zu mindestens einem Falz (30, 32), definiert ist und der Teil einen Bereich geringerer mechanischer Festigkeit (60, 62, 64) umfasst, der beim Stanzen definierten wird und der sich über mindestens eine der Wände (20, 22) asymmetrisch bezüglich der Referenzachsen erstreckt.

12. Teil nach einem der Ansprüche 1 bis 11, **dadurch gekennzeichnet, dass** die Bereiche (60, 62, 64) geringer mechanischer Festigkeit sich mindestens teilweise über zwischen den Wänden (20, 22) und einem Teilboden (10) bzw. Falzen (30, 32) gegebene Übergangszonen, sogar ebenfalls teilweise über den Teilboden (10) bzw. die Falze (30, 32) erstrecken.

13. Teil nach einem der Ansprüche 1 bis 12, **dadurch gekennzeichnet, dass** er mindestens einen Abschnitt umfasst, in dem mindestens zwei Bereiche (60, 62, 64) geringerer mechanischer Festigkeit als der Teilkörper jeweils an beiden Seiten eines Längsmittelabschnitts (PM) des Teils angeordnet sind und abwechselnd an längs entlang des Teils getrennten Stellen angeordnet sind und mindestens einen Abschnitt umfasst, in dem mindestens zwei Bereiche (60, 62, 64) geringerer mechanischer Festigkeit als der Teilkörper jeweils an beiden Seiten eines Längsmittelabschnitts (PM) des Teils angeordnet sind und gegenüberliegend an längs identischen Stellen entlang des Teils angeordnet sind.

14. Teil nach einem der Ansprüche 1 bis 13, wobei der Metallteil ein Längsbalken ist.

## Claims

1. Metal part, in particular for manufacturing a motor vehicle, having at least two regions (60, 62, 64) of lower mechanical strength than the body of the part, arranged respectively on both sides of a longitudinal median section (PM) of said part, **characterised in that** said at least two regions are situated alternately and in longitudinally separated locations along the part, said regions not being adjacent.

2. Part according to claim 1, **characterised in** the the regions (60, 62, 64) of lower mechanical strength than the body of the part are formed by locally controlling the stamping temperature.

3. Part according to any one of claims 1 to 2, **characterised in that** the body of the part has high mechanical strength, of typically above 1400 MPa, while the regions (60, 62, 64) of lower mechanical strength have a mechanical strength of less than 1100 MPa, typically comprised between 500 and 1000 MPa.

4. Part according to any one of claims 1 to 3, **characterised in that** it comprises as well at least another region (60, 62, 64) of lower mechanical strength than the body of the part, such that the part has regions (60, 62, 64) of lower mechanical strength than the body of the part arranged respectively on both sides of the longitudinal median plane (PM) and formed facing one another in longitudinally identical locations along the part.

5. Part according to any one of claims 1 to 4, **characterised in that** the metal part comprises a part bottom (10) and two side rabbets (30, 32) separated from the part bottom (10) by walls (20, 22), and the part comprises a region of lower mechanical strength (60, 62) defined during stamping and which has a non-constant width perpendicularly to a cross-sectional plane of the part.

6. Part according to any one of claims 1 to 5, **characterised in that** the regions (50 ; 60, 62, 64) of lower mechanical strength than the body of the part are limited by straight-edged areas.

7. Part according to any one of claims 1 to 6, **characterised in that** the areas (50 ; 60, 62, 64) of lower mechanical strength than the body of the part are limited by curved-edged areas.

8. Part according to any one of claims 1 to 7, **characterised in that** it comprises at least two regions (50 ; 60, 62, 64) of lower mechanical strength than the body of the part distributed through the part and having identical width variations along the part.

9. Part according to any one of claims 1 to 7, **characterised in that** it comprises at least two regions (50 ; 60, 62, 64) of lower mechanical strength than the body of the part distributed through the part, and having width variations with alternately opposing orientations along the part.

10. Part according to any one of claims 1 to 9, **characterised in that** the regions (60, 62, 64) of low mechanical strength are defined on the walls (20, 22) of the part.

11. Part according to any one of claims 1 to 10, **characterised in that** the metal part comprises a part bottom (10) and two side rabbets (30, 32) separated from the part bottom (10) by walls (20, 22), the section of the metal part being defined by two reference axes (A-A), one being generally orthogonal to the part bottom (10) and the other one being generally parallel to at least one rabbet (30, 32), and the part comprises a region of lower mechanical strength (60, 62, 64) defined during stamping and which stretches asymmetrically with respect to the reference axes over at least one of the walls (20, 22).

12. Part according to any one of claims 1 to 11, **characterised in that** the regions (60, 62, 64) of low mechanical strength stretch at least in part over transition areas between walls (20, 22) and a part bottom (10) and/or rabbets (30, 32), even as well in part over the part bottom (10) and/or the rabbets (30, 32).

13. Part according to any one of claims 1 to 12, **characterised in that** it comprises at least one segment in which at least two regions (60, 62, 64) of lower mechanical strength than the body of the part are arranged respectively on both sides of a longitudinal median section (PM) of said part and are alternately situated in longitudinally separated locations along the part, and at least one segment in which at least two regions (60, 62, 64) of lower mechanical strength than the body of the part are respectively arranged on both sides of a longitudinal median section (PM) of said part and situated facing one another in longitudinally identical locations along the part.

14. Part according to any one of claims 1 to 13, wherein the metal part is a stringer.
